# EUROPÄISCHE PATENTSCHRIFT

(11) **EP 2 918 552 B1**
(45) Veröffentlichungstag und Bekanntmachung des Hinweises auf die Patenterteilung: **15.03.2017**
(21) Anmeldenummer: 14158671.9
(22) Anmeldetag: 10.03.2014
(51) Int. Cl.: C02F 3/12, B09C 1/10, C02F 3/32, C02F 101/10

(54) **VERFAHREN ZUR ABTRENNUNG VON FESTSTOFFEN UND RÜCKGEWINNUNG VON PHOSPHATEN AUS WÄSSRIGEN SUSPENSIONEN**
METHOD FOR THE SEPARATION OF SOLIDS AND RECOVERY OF PHOSPHATES FROM AQUEOUS SUSPENSIONS
PROCÉDÉ DE SÉPARATION DE SOLIDES ET RÉCUPÉRATION DE PHOSPHATES À PARTIR DE SUSPENSIONS AQUEUSES

(43) Veröffentlichungstag der Anmeldung: 16.09.2015
(73) Patentinhaber: Pauly, Udo, 37133 Friedland/Deiderode (DE)
(72) Erfinder: Pauly, Udo, 37133 Friedland/Deiderode (DE); Rehfus, Stefan, 37085 Göttingen (DE)
(74) Vertreter: REHBERG HÜPPE + PARTNER

(56) Entgegenhaltungen:
- WO-A2-2012/150296
- A. DRIZO: "Phosphate and ammonium removal by constructed wetlands with horizontal subsurface flow, using shale as a substrate", WATER SCI. TECHNOL., VOL35,, Bd. 35, Nr. 5, 1. Januar 1997 (1997-01-01) , Seiten 95-102, XP055121509,

## Beschreibung

### TECHNISCHES GEBIET DER ERFINDUNG

Die Erfindung betrifft ein Verfahren zur Rückgewinnung von Phosphaten aus einer Suspension von Feststoffen in einer wässrigen Lösung mit den Schritten Konzentrieren von Phosphaten in der wässrigen Lösung, Trennen der Feststoffe von der wässrigen Lösung und Fällen der Phosphate aus der wässrigen Lösung.

### STAND DER TECHNIK

Aus der DE 43 23 610 C1 ist ein Biopolder bekannt, der ein Zwischenlager für zu reinigende Böden oder Schlämme bildet und in dem biologische Prozesse ablaufen. Der Biopolder dient zur biologischen Reinigung und/oder Mineralisierung von Böden, Schlämmen und Abwässern, die mit organischen oder anorganischen Schadstoffen belastet sind. Der Biopolder weist gegenüber dem Erdreich eine Abdichtung in Form einer wasserdichten Folie auf. Sein Boden ist mit einer Drainageschüttung bedeckt, die entweder mit Eisenverbindungen besetzt ist oder vollständig aus solchen besteht. Auf der Drainageschüttung ist ein wasserdurchlässiges Vlies angeordnet, oberhalb dessen die zu reinigenden Substanzen in den Biopolder eingebracht werden und dort eine mit den organischen und anorganischen Schadstoffen belastete Boden- oder Schlammschicht bilden. Diese Schicht wird mit geeigneten Pflanzen oder entsprechenden Rhizomen bepflanzt, durch deren feine Wurzeln Sauerstoff in die Boden- oder Schlammschicht gelangt. Über einen in eine Seitenwand eingebauten Wasserstandsregler wird eine geeignete Wasserstandshöhe in dem Biopolder eingestellt. Die Aktivität aerober Mikroorganismen wird durch gezielte Zugabe von Nährstoffen und/oder Zuschlagstoffen gefördert oder stabilisiert. Durch Regeneintrag erfolgt eine Wanderung von nicht umgesetzten Schadstoffen sowie von Umwandlungsprodukten aerober Prozesse, z. B. Sulfaten, Phosphaten oder Schwermetallen, aus einem oberen aeroben Bereich in einen unteren anaeroben Bereich des Biopolders. Die Phosphate reagieren dort mit den Eisenverbindungen der Drainageschüttung, beispielsweise zu FePO₄ und werden so in der Drainageschüttung fixiert. Das gereinigte Wasser wird über ein Grabensystem oder eine Pumpe abgeführt.

Die DE 197 00 434 C1 beschreibt ein Verfahren zur Klärschlammvererdung unter Vermeidung von Chemikalien. Dazu wird flüssiger Klärschlamm in einen ersten Polder bis zu einer ersten Füllstandshöhe eingebracht, der flüssige Klärschlamm wird getrocknet, feinwurzelige, schnellwachsende Pflanzen werden eingesät, und eine Wachstumsphase der Pflanzen über einen vorgegebenen Zeitraum wird eingeleitet. Dies wird bis zur vollständigen Befüllung des Polders wiederholt, und nach erneutem Ruhenlassen wird der Polder entleert. In einer Ausführungsform des bekannten Verfahrens werden die einzelnen Verfahrenschritte in mehreren Poldern zeitlich versetzt durchgeführt. Vorzugsweise werden drei Polder verwendet, so dass zum Beispiel das Einbringen des flüssigen Klärschlamms in den ersten Polder parallel zum Trocknen des flüssigen Klärschlamms und dem Einsäen von feinwurzeligen, schnellwachsenden Pflanzen in dem zweiten Polder und der Wachstumsphase der Pflanzen in dem dritten Polder erfolgt. Jeder Polder ist von Wänden und einer Bodenplatte, z. B. aus Beton, oder von einer zum Untergrund und zu Seitenböschungen Wasser sperrenden oder nur schwer Wasser durchlassenden Schicht umgeben. Auf der Bodenplatte oder der zum Untergrund sperrenden Schicht befindet sich eine Rohr- oder Flächendrainage, die von einer Kiesschicht bedeckt wird. Die Kiesschicht wird beispielsweise mit einem Mineralgemisch oder Betonsteinen abgedeckt. Überstauwasser wird mithilfe eines Schachtbauwerkes an der Wandung abgeführt. Drainagewasser und Überstauwasser werden über Rohrleitungen einer Abwasserbehandlungsanlage zugeführt.

Zur Phosphorrückgewinnung bei der Abwasserreinigung ist das sogenannte PRISA-Verfahren bekannt (Montag, 2008: Phosphorrückgewinnung bei der Abwasserreinigung - Entwicklung eines Verfahrens zur Integration in kommunale Kläranlagen, Dissertation, RWTH Aachen), das die Merkmale des Oberbegriffs des unabhängigen Patentanspruchs 1 aufweist. Dieses Verfahren umfasst vor und nach einer anaeroben Schlammbehandlung ein Eindicken des Schlamms in einem Voreindicker und einem Nacheindicker. Anschließend wird eine maschinelle Schlammentwässerung durchgeführt. Ein phosphatreiches Überstandswasser des Voreindickers, ein ammonium- und phosphatreiches Überstandswasser des Nacheindickers und das Schlammwasser aus der maschinellen Schlammentwässerung werden gemeinsam, beispielsweise mithilfe eines Tuchfilters, gefiltert. In einem Mischbehälter werden dem Filtrat Magnesiumoxid als Fällmittel und Natronlauge zur Einstellung des pH-Wertes zugesetzt. In einem Kristallisationsbehälter bilden sich Magnesiumammoniumphosphatkristalle. Der entwässerte Klärschlamm aus der maschinellen Schlammentwässerung muss getrennt entsorgt werden. Da die Realisation dieses Verfahrens Investitionen in einen Voreindicker, einen Nacheindicker und Maschinen zur Schlammentwässerung erfordert, ist es erst bei großen Kläranlagen wirtschaftlich einsetzbar.

Aus der US 3,236,766 A und der US 4,141,822 A ist ein auch als Phostrip-Verfahren bezeichnetes Verfahren zum Abtrennen von Phosphorverbindungen von Abwässern bekannt. Durch Behandeln von rohen oder vorbehandelten Abwässern werden ein Ablauf, der weitgehend frei von Phosphat ist, sowie ein phosphatreicher Schlamm erhalten. Dazu wird der pH-Wert in einem Bereich von etwa 6,2 bis etwa 8,5 eingestellt. Die rohen oder vorbehandelten Abwässer werden mit Schlamm versetzt, was zur Bildung einer homogenen gemischten Flüssigkeit, wie sie für eine hohe Effizienz des Verfahrens notwendig ist, starken Rührens bedarf. Sauerstoff wird der gemischten Flüssigkeit zugeführt und darin gelöst; phosphatreicher Schlamm wird zurückgewonnen, und ein weitgehend phosphatfreier Ablauf wird produziert. Der phosphatreiche Schlamm wird für einige Stunden unter anaeroben Bedingungen gehalten, um den Phosphatgehalt in seiner Festphase zu reduzieren. Gemäß der US 4,141,822 A wird der Übergang des Phosphats in eine sich absetzende phosphatreiche Flüssigkeit durch Zugabe eines Hilfsmediums beschleunigt. Anschließend wird ein Teil des Schlamms zur Mischung mit Abwässern zurückgeführt.

Bei einem in der DE 2442031A1 beschriebenen Verfahren erfolgt während einer Verweilzeit von 2 bis 20 Stunden in einem Behälter ein Absetzen des Schlamms, wobei die löslichen Phosphate in den oberen Bereich des sich absetzenden Schlamms wandern. So entsteht zwischen einer Schlammschicht und praktisch phosphatfreiem überstehendem Wasser eine an Phosphaten angereicherte wässrige Schicht, die anschließend aus der Absetzzone entfernt und durch Mischen mit einem Mittel zum Ausfällen der Phosphate weiterbehandelt wird. Die Schlammschicht wird in den Prozess zurückgeführt, was jedoch praktisch zu Problemen beim neuerlichen Absetzen des Schlamms führt. Wie beim PRISA-Verfahren ist für dieses Verfahren ein hoher verfahrenstechnischer Aufwand zu bewältigen; spezielle Verfahrensstufen sind zu errichten, und viel Energie ist z. B. zum Rühren des Schlamms erforderlich. Daher ist dieses Verfahren ebenfalls erst beim Einsatz in großem Maßstab wirtschaftlich.

In der DE 10 2008 038 886 A1 wird ein Verfahren zur selektiven Gewinnung von Phosphor aus schwermetall- und phosphathaltigen Feststoffen beschrieben. Dabei wird der schwermetall- und phosphorhaltige Feststoff mit Mikroorganismen behandelt, die laugungsaktive und polyphosphatspeichernde Mikroorganismen umfassen. Dies geschieht unter sauren aeroben Bedingungen und dient zum Freisetzen von Schwermetallen und Phosphat aus dem Feststoff und zur Aufnahme des freigesetzten Phosphats durch die polyphosphatspeichernden Mikroorganismen. Anschließend wird mit Phosphor angereicherte Biomasse abgetrennt. Der akkumulierte Phosphor ist pflanzenverfügbar und frei von unerwünschten Schwermetallen, so dass die Biomasse als phosphathaltiges Düngemittel verwendet werden kann.

Horn, Sartorius, Tettenborn 2010: Technologievorausschau für Phosphorrecyclingtechnologien (Arbeitspaket 6) gibt eine Übersicht über weitere Verfahren zur Phosphatrückgewinnung.

Die WO 2012/150296 A2 offenbart ein Verfahren und eine Anlage zur Dephosphatisierung von Abwässern. Die Abwässer werden dabei in einem biologischen Vorverfahren vorbehandelt. Die vorbehandelten Abwässer werden in einem Vorlagebehälter mit Koagulanzien zur Ausfällung von Phosphaten geimpft und bei Bedarf zur besseren Verteilung der Koagulanzien gerührt. Anschließend werden die Abwässer durch einen Filter geleitet, der mit Rhizompflanzen bepflanzt ist. Von der Oberfläche dieses Filters werden die ausgefällten Phosphate geborgen. Das Impfen mit Koagulanzien in dem Vorlagebehälter und das Ableiten der Abwässer durch den pflanzlichen Filter kann in mehreren Etappen aufeinanderfolgend durchgeführt werden, offenbart sind insbesondere zwei aufeinanderfolgende Etappen mit jeweils einem Vorlagebehälter und jeweils einem pflanzlichen Filter.

### AUFGABE DER ERFINDUNG

Der Erfindung liegt die Aufgabe zugrunde, ein Verfahren mit den Merkmalen des Oberbegriffs des Patentanspruchs 1 aufzuzeigen, mit dem Phosphate aus häuslichen und industriellen Abwässern auch in kleiner dimensionierten Kläranlagen für beispielsweise weniger als 100.000 Einwohner kosteneffizient zurückgewonnen werden können.

### LÖSUNG

Die Aufgabe der Erfindung wird erfindungsgemäß durch ein Verfahren mit den Merkmalen des unabhängigen Patentanspruchs gelöst. Bevorzugte erfindungsgemäße Ausgestaltungen des Verfahrens sind den abhängigen Patentansprüchen zu entnehmen.

### BESCHREIBUNG DER ERFINDUNG

Die Erfindung betrifft ein Verfahren, mit dem Phosphate aus einer Suspension von Feststoffen in einer wässrigen Lösung rückgewonnen werden können. Solche Suspensionen können beispielsweise häusliche oder industrielle Abwässer sein, aber auch Abfälle, beispielsweise aus der lebensmittelverarbeitenden Industrie oder der Landwirtschaft. In einem Vererdungsbecken wird eine Drainageschicht mit einer reaktiven organischen Schicht, beispielsweise aus oder auf der Basis von Kompost, bedeckt. Die wässrige Suspension wird auf diese reaktive organische Schicht aufgebracht. In Folge der Schwerkraft erfolgt eine Separation der wässrigen Lösung, die bis in die Drainageschicht abfließen kann, von den Feststoffen, die Teil der reaktiven organischen Schicht werden, ohne dass der Einsatz von Filtermaterialien oder Energie nötig wäre. In der reaktiven organischen Schicht erfolgt ein biologischer Abbau von phosphathaltigen Feststoffen durch Bakterien, Pilze und sonstige, auch höher entwickelte, Destruenten wie Kompostwürmer. In der reaktiven organischen Schicht erfolgt eine starke Volumenreduktion, so dass jeweils im Abstand weniger Tage weitere Schichten wässriger Suspension aufgebracht werden können. Das Vererdungsbecken kann daher ohne Leerung über mehrere Jahre betrieben werden, was besonders effizient ist. Durch den biologischen Abbau erhöht sich der Anteil des Phosphats, das in löslicher Form vorliegt. Dieses lösliche Phosphat kann mit der wässrigen Lösung aus der reaktiven organischen Schicht in die Drainageschicht ausgewaschen werden. Von dort wird die wässrige Lösung abgezogen, wann immer dies aufgrund ihres angereicherten Phosphatgehalts günstig erscheint. Die Phosphatkonzentration in der Drainageschicht wird laufend überwacht; dies kann etwa durch regelmäßige Probenentnahme oder Einbringen einer Sonde geschehen. Die wässrige Lösung wird vorzugsweise dann abgezogen, wenn eine für das Ausfällen besonders vorteilhafte Phosphatkonzentration erreicht ist. Die wässrige Lösung kann, wenn ihre Phosphatkonzentration unterhalb eines vorgegebenen Grenzwerts liegt, in das Vererdungsbecken zurückgeführt werden. Aus der abgezogenen wässrigen Lösung werden die gelösten Phosphate ausgefällt und liegen anschließend in einer reinen Form vor, die sich zum Beispiel zur Verwendung in Düngemitteln eignet. Restmengen von Phosphaten, die sich in der wässrigen Lösung nicht lösen und dauerhaft in den abgetrennten und stark volumenreduzierten Feststoffen verbleiben, sind durch die oberirdische Ablagerung der Feststoffe in dem Vererdungsbecken dauerhaft zugänglich und können bei Bedarf durch Abschälung ebenfalls einer weiteren Nutzung zugeführt werden (z. B. Verbrennung mit nachfolgender Rückgewinnung von Phosphaten aus den Verbrennungsaschen).

Zusätzlich zu einem vorhandenen Vererdungsbecken und einem Behälter zum Ausfällen werden für das erfindungsgemäße Verfahren keine weiteren Vorrichtungen benötigt. Es ist auch kein besonderer verfahrenstechnischer Aufwand zu bewältigen, da das Separieren der wässrigen Suspension und das Konzentrieren der Phosphate in der wässrigen Lösung in einem Arbeitsgang und demselben Vererdungsbecken erfolgen. Vererdungsbecken sind bei einigen Kläranlagen, gerade kleineren Kläranlagen ab etwa 1000 Einwohner, sowieso vorhanden oder für solche kleineren Kläranlagen jedenfalls von Vorteil. An den Behälter zum Ausfällen bestehen keine besonderen Anforderungen; er beansprucht auch nicht viel Platz.

Das Fällen der Phosphate kann beispielsweise durch Zugabe von Magnesium erfolgen, so dass MAP ausfällt. Dies ist besonders vorteilhaft, da die in der wässrigen Lösung vorliegenden Phosphat- und Ammoniumkonzentrationen bereits bei sehr geringen Zugaben von Magnesium zum Ausfallen von MAP führen.

Um zu gewährleisten, dass keine Umweltgefährdung durch austretende Stoffe auftritt, wird das Vererdungsbecken zum Untergrund hin flüssigkeitsdicht abgeschlossen, zum Beispiel durch eine Folie oder eine mit einem flüssigkeitsdichten Anstrich versehene Betonwanne. Hingegen ist das Vererdungsbecken an seiner Oberseite in aller Regel offen. So werden die Abbauprozesse durch Luftzufuhr, Sonneneinstrahlung und andere Witterungseinflüsse unterstützt.

Um das Eindicken der Suspensionen zu steuern, kann das Vererdungsbecken nach Bedarf ganz oder teilweise abgedeckt werden, so dass beispielsweise eine Verdünnung oder das Auswaschen durch Regen, wobei das Regenwasser Teil der wässrigen Lösung wird, gefördert oder verhindert wird. Dies kann beispielsweise durch ein bewegliches Dach oder eine Folie geschehen. Auf diese Weise kann auch das Abtrocknen der Feststoffe oder der reaktiven organischen Schicht durch Kontrolle der Sonneneinstrahlung gesteuert werden.

In einer Ausführungsform der Erfindung kann das Abtrocknen der Feststoffe oder der reaktiven organischen Schicht außerdem dadurch beschleunigt werden, dass die Drainageschicht beheizt wird. Auf diese Weise können auch ideale Temperaturbedingungen für mikrobielle Abbauprozesse eingestellt werden. Zur Heizung kann Abwärme, beispielsweise aus einer Faulungsanlage, einem Abwasserstrom oder andere auf derselben Kläranlage anfallende Prozesswärme, verwendet werden, so dass kein zusätzlicher Energiebedarf anfällt.

Vorzugsweise wird mit einer Sonde das Redoxpotential der wässrigen Lösung aus der Drainageschicht überwacht. Für einen idealen Ablauf der mikrobiellen Abbauprozesse in der reaktiven organischen Schicht sind überwiegend aerobe Prozesse erwünscht, daher werden überwiegend oxidierte Verbindungen in der abgezogenen wässrigen Lösung und damit positive Redoxpotentiale im Bereich von mehr als 100 mV angestrebt. Fällt das Redoxpotential unter diesen Wert, lässt man den betreffenden Teilbereich des Vererdungsbeckens vorübergehend trockenfallen, so dass vermehrt Luftsauerstoff in die reaktive organische Schicht gelangt.

Die wässrige Lösung kann außerdem angestaut werden, so dass sie bis in die aufgelandeten Feststoffe hineinreicht. So kann sie dort gelöste Phosphate auswaschen und in die Drainageschicht tragen.

Die reaktive organische Schicht kann bepflanzt werden, um durch Schaffung eines mikrobiell besiedelten Wurzelraums die mikrobiellen Abbauprozesse zu fördern. Durch das Wurzelwerk wird die Schicht außerdem durchlüftet und es bilden sich feine Kanäle aus, so dass die Filterwirkung der Schicht nicht nachlässt. Zudem kann ein verstärkter Sauerstoffeintrag in die Schicht aerobe Abbauprozesse fördern. Ebenso dienen die Pflanzen als Zwischenspeicher für verschiedene Substanzen, die sie während ihres Wachstums binden, so etwa Kohlendioxid und Phosphate. Das Aufkonzentrieren der Phosphate aus der wässrigen Suspension wird durch die Pflanzen begünstigt. Die Pflanzen werden durch die Phosphate gedüngt und nehmen sie bei ihrem Wachstum auf. Die Pflanzen bilden so einen temporären Phosphatspeicher. Wenn die Pflanzen absterben, werden sie selbst Teil der organischen Schicht. Die gespeicherten Phosphate werden dann abgebaut und gelangen so in aufkonzentrierter Form zurück in die wässrige Lösung, mit der sie ausgeschwemmt werden.

Als Bepflanzung sind C2-Pflanzen wie etwa Schilf (Phragmites australis) bevorzugt. Es ist aber auch eine Bepflanzung mit Nutzpflanzen wie etwa Pappeln oder Weiden zur Holzgewinnung oder Raps zur Energiegewinnung möglich, so dass ein zusätzlicher Nutzen der reaktiven organischen Schicht als Anbaufläche geschaffen wird, was die Wirtschaftlichkeit des Verfahrens weiter erhöht.

In einer Ausführungsform der Erfindung wird die wässrige Suspension über mehrere über die Fläche des Vererdungsbeckens verteilte Zulaufpunkte eingeleitet. Wenn jeder Zulaufpunkt individuell angesteuert werden kann, ermöglicht dies, mehrere Teilflächen des Vererdungsbeckens gemeinsam oder getrennt zu nutzen. Wenn ein Vererdungsbecken beispielsweise sechs Zulaufpunkte aufweist, dann können drei benachbarte Zulaufpunkte gemeinsam einen Teilbereich des Vererdungsbeckens bilden, der einheitlich bewirtschaftet wird. Zwei weitere benachbarte Zulaufpunkte können zu einem späteren Zeitpunkt in Betrieb gehen und einen kleineren Teilbereich bedienen, während der sechste Zulaufpunkt wegen geringer Auslastung weiter brach liegen kann. Fällt dann beispielsweise in einem Teilbereich das Redoxpotential unter einen angestrebten Wert, so kann man diesen Teilbereich trockenfallen lassen, während anfallende Abwässer in anderen Teilbereichen weiterhin verarbeitet werden können. Insbesondere können einzelne Teilbereiche auch zur Zwischenlagerung von gebundenen Stoffen, insbesondere von in Pflanzen gebundenen Phosphaten, dienen. Es ist außerdem möglich, in den verschiedenen Teilbereichen unterschiedliche Stoffkonzentrationen oder Eindickungen der aufgelandeten Feststoffe - je nach deren späterer Verwendung - anzustreben. Es ist auch möglich, einzelne Teilbereiche stillzulegen und nach einer Trockenphase mit maximaler Abtrennung der phosphatreichen wässrigen Lösung die aufgelandeten Feststoffe aus dem Vererdungsbecken zu entnehmen und einer weiteren Nutzung zuzuführen. Dabei können auch in den aufgelandeten Feststoffen verbliebene Phosphate und sonstige Wertstoffe zurückgewonnen werden, indem z. B. die Feststoffe verbrannt und die Wertstoffe aus den entstehenden Aschen geborgen werden.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand von in den Figuren dargestellten bevorzugten Ausführungsbeispielen weiter erläutert und beschrieben.
- **Fig. 1**: zeigt ein Vererdungsbecken mit einem separaten Behälter zum Ausfällen von Phosphaten aus einer aus dem Vererdungsbecken abgezogenen wässrigen Lösung.
- **Fig. 2**: zeigt schematisch den Lauf der wässrigen Suspension durch das Vererdungsbecken und den Behälter gemäß Fig. 1.
- **Fig. 3**: ist eine Draufsicht auf ein Vererdungsbecken, das in mehrere Teilbereiche mit jeweils einem Zulaufpunkt aufgeteilt ist.

### FIGURENBESCHREIBUNG

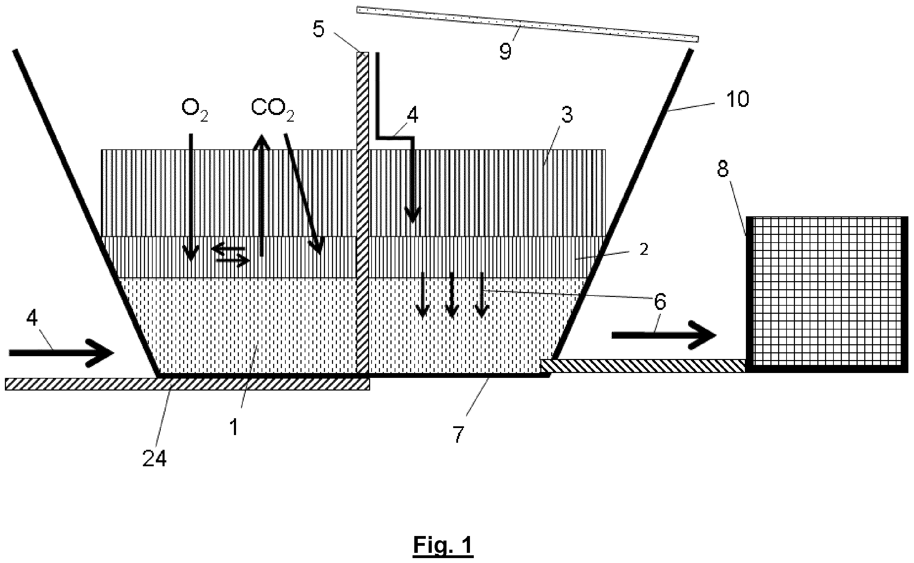

**Fig. 1** zeigt ein Vererdungsbecken 10, das mit einer wasserdichten Schicht 7, zum Beispiel einer Kunststofffolie, unten und seitlich, zum Beispiel gegen den Untergrund und Erdwälle, abgedichtet ist. Oberhalb der wasserdichten Schicht 7 befindet sich eine Drainageschicht 1, beispielsweise aus Drainagekies, auf die eine reaktive organische Schicht 2, beispielsweise auf der Basis von Kompost, aufgebracht wurde. In die reaktive organische Schicht 2 sind Pflanzen 3 gepflanzt, die die reaktive organische Schicht 2 durchwurzeln. Die Pflanzen 3 bewirken den Eintrag von Sauerstoff O₂ in die reaktive organische Schicht 2, sowie den Austausch von Kohlendioxid CO₂. Eine Rohrleitung 24, die zunächst unterhalb der wasserdichten Schicht 7 verläuft und im Zentrum des Vererdungsbeckens 10 durch alle Schichten hindurch bis auf Höhe der Beckenkrone des Vererdungsbeckens aufsteigt, bildet einen Zulaufpunkt 5. Über den Zulaufpunkt 5 wird die Suspension 4 von Feststoffen in einer wässrigen Lösung 6 auf die reaktive organische Schicht 2 aufgebracht. Die von der wässrigen Suspension 4 abgefilterte wässrige Lösung 6 fließt in Folge der Schwerkraft in die Drainageschicht 1 ab und wird zum Ausfällen von Phosphaten in einen separaten Behälter 8 gepumpt. Die Feststoffe aus der Suspension 4 werden Teil der reaktiven organischen Schicht 2. Das Vererdungsbecken 10 kann ganz oder teilweise mit einem Dach 9 bedeckt werden.

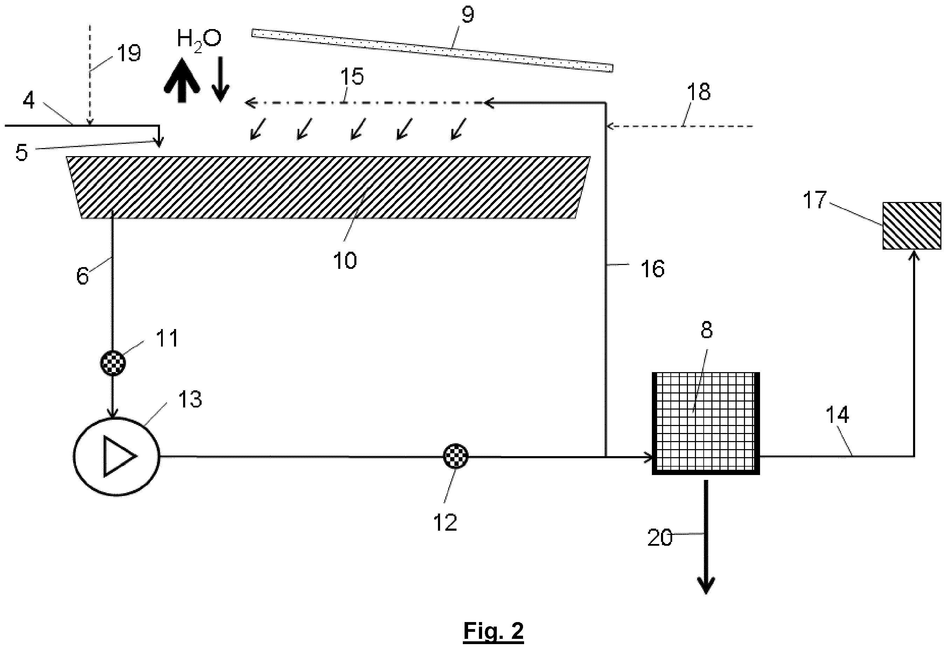

**Fig. 2** zeigt schematisch den Lauf der Suspension 4 bzw. der wässrigen Lösung durch das Vererdungsbecken 10 und den Behälter 8. Die Suspension 4 wird in ihrem Rohzustand in das Vererdungsbecken 10 eingebracht. Optional können zur Förderung ihrer Entwässerung Polymere 19 zugesetzt werden. Die abgefilterte wässrige Lösung 6 wird mittels einer Pumpe 13 in den Behälter 8 gepumpt, wo durch Zugabe von Magnesium Magnesiumammoniumphosphat 20 ausgefällt wird. Aus dem Behälter 8 kann die phosphatfreie wässrige Lösung 14 in eine Abwasserreinigungsanlage 17 verbracht werden. Die wässrige Lösung 6 wird mit einer Redox-Messsonde 11 überwacht. Sollte das Redoxpotential unter einen Richtwert von 100 mV fallen und damit ein Hinweis auf das Überwiegen unerwünschter anaerober Prozesse in der reaktiven organischen Schicht 2 vorliegen, kann eine weitere Zufuhr der wässrigen Suspension 4 gestoppt werden. So können sich die Pflanzen 3 erholen, und der Eintrag von Sauerstoff steigt wieder an und fördert die Zunahme aerober Prozesse. Eine Phosphat-Messsonde 12 misst die Phosphatkonzentration in der abgezogenen wässrigen Lösung 6. Liegt die Phosphatkonzentration unter einem gewünschten Wert, kann die wässrige Lösung 6 statt dem Behälter 8 dem Vererdungsbecken 10 als Rezyklat 16 wieder zugeführt werden, optional mittels Verregnung 15 über dem Vererdungsbecken 10. Dem Rezyklat 16 können Alkali- oder Erdalkalimetalle 18 zugesetzt werden, um den pH-Wert zu erhöhen und eine für die Fällung von Magnesiumammoniumphosphat 20 günstige Zusammensetzung der wässrigen Lösung 6 zu erreichen. Die Anreicherung von Phosphat in der wässrigen Lösung 6 kann weiterhin durch den Einsatz des Daches 9 gesteuert werden. Mit dem Dach kann Niederschlagswasser H₂O zur Eindickung der in das Vererdungsbecken 10 einbrachten Suspension 4 abgesperrt, oder umgekehrt eine Verdunstung von H₂O durch Sonnenwärme verhindert werden.

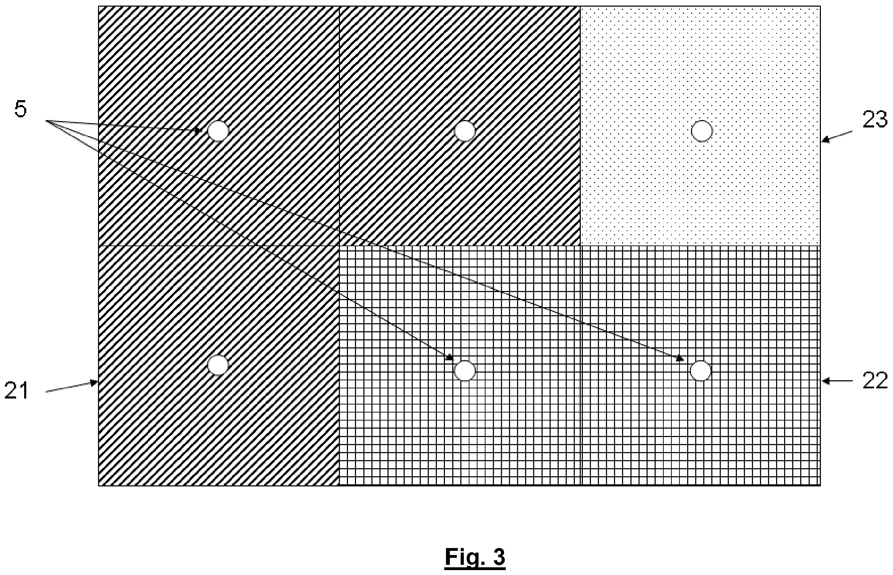

**Fig. 3** zeigt ein Vererdungsbecken 10, das durch mehrere, hier sechs, separat ansteuerbare Zulaufpunkte 5 in separat bewirtschaftete Teilbereiche 21 bis 23 aufgeteilt ist. Drei untereinander benachbarte Zulaufpunkte 5 definieren einen ersten Teilbereich 21 des Vererdungsbeckens, während zwei weitere benachbarte Zulaufpunkte 5 einen kleineren zweiten Teilbereich 22 des Vererdungsbeckens versorgen. Ein kleinster, dritter Teilbereich 23 des Vererdungsbeckens ist durch den sechsten Zulaufpunkt 5 definiert. Auch wenn die wässrige Lösung 6 zentral aus dem Vererdungsbecken 10 abgeführt wird, kann sie bei Beschickung nur eines der Teilbereiche 21 bis 23 diesem Teilbereich zugeordnet werden. So kann wässrige Lösung 6 gezielt dann dem Behälter 8 zum Ausfällen von Phosphaten zugeführt werden, wenn sie von der Beschickung eines Teilbereichs 21 bis 23 stammt, in dem die Pflanzen 3 gerade absterben und somit während ihres Wachstums gebundene Phosphate in konzentrierter Form in die wässrige Lösung 6 freisetzen.

### BEZUGSZEICHENLISTE

- 1: Drainageschicht
- 2: Reaktive organische Schicht
- 3: Pflanzen
- 4: Wässrige Suspension
- 5: Zulaufpunkt
- 6: Wässrige Lösung
- 7: Wasserdichte Schicht
- 8: Behälter
- 9: Dach
- 10: Vererdungsbecken
- 11: Redox-Messsonde
- 12: Phosphat-Messsonde
- 13: Pumpe
- 14: Phosphatfreie wässrige Lösung
- 15: Verregnung
- 16: Rezyklat
- 17: Abwasserreinigungsanlage
- 18: Alkali- oder Erdalkalimetalle
- 19: Polymere
- 20: Magnesiumammoniumphosphat (MAP)
- 21: Teilbereich
- 22: Teilbereich
- 23: Teilbereich
- 24: Rohrleitung

## Patentansprüche

1. Verfahren zur Rückgewinnung von Phosphaten aus einer Suspension (4) von Feststoffen in einer wässrigen Lösung (6) mit
- Konzentrieren von Phosphaten in der wässrigen Lösung (6),
- Trennen der Feststoffe von der wässrigen Lösung (6) und
- Fällen der Phosphate aus der wässrigen Lösung (6),
**dadurch gekennzeichnet,**
- **dass** das Konzentrieren und Trennen umfasst
- Anordnen einer Drainageschicht (1) und einer reaktiven organischen Schicht (2) in einem Vererdungsbecken (10),
- Einleiten der Suspension (4) oberhalb der reaktiven organischen Schicht (2) in das Vererdungsbecken (10),
- Erhöhen des Anteils der Phosphate, die in der reaktiven organischen Schicht (2) in löslicher Form vorliegen, durch biologischen Abbau von phosphathaltigen Feststoffen,
- Auswaschen der löslichen Phosphate aus der reaktiven organischen Schicht (2) in die Drainageschicht (1) mit der wässrigen Lösung (6),
- Überwachen der Phosphatkonzentration in der wässrigen Lösung (6) aus dem Bereich der Drainageschicht (1) und
- intermittierendes Abziehen der wässrigen Lösung (6) aus dem Bereich der Drainageschicht (1) und
- **dass** das Fällen der Phosphate aus den abgezogenen Volumina der wässrigen Lösung mit erhöhtem Phosphatgehalt ab einem vorgegebenen Grenzwert der Phosphatkonzentration erfolgt.

2. Verfahren nach Anspruch 1, **gekennzeichnet durch** flüssigkeitsdichtes Abdichten des Vererdungsbeckens (10) zum Untergrund und der Witterung Aussetzen der in das Vererdungsbecken (10) eingeleiteten Suspensionen (4).

3. Verfahren nach einem der vorhergehenden Ansprüche, **gekennzeichnet durch** Überwachen des Redoxpotentials der wässrigen Lösung (6) aus dem Bereich der Drainageschicht (1).

4. Verfahren nach einem der vorhergehenden Ansprüche, **gekennzeichnet durch** Rückführen von abgezogener wässriger Lösung (6), deren Phosphatgehalt unter einem vorgegebenen Grenzwert liegt, in das Vererdungsbecken (10).

5. Verfahren nach einem der vorhergehenden Ansprüche, **gekennzeichnet durch** nacheinander Einstellen unterschiedlicher Trocknungsgrade von in dem Vererdungsbecken (10) aufgelandeten Feststoffen.

6. Verfahren nach Anspruch 5, **gekennzeichnet durch** Einstauen der wässrigen Lösung (6) bis in den Bereich der aufgelandeten Feststoffe vor dem Abziehen der wässrigen Lösung (6) aus dem Bereich der Drainageschicht (1).

7. Verfahren nach einem der vorhergehenden Ansprüche, **gekennzeichnet durch** Zugeben von Magnesium zu den Volumina der wässrigen Lösung (6) mit erhöhtem Phosphatgehalt zum Ausfällen von Magnesiumammoniumphosphat.

8. Verfahren nach einem der vorhergehenden Ansprüche, **gekennzeichnet durch** Bepflanzen der reaktiven organischen Schicht (2).

9. Verfahren nach Anspruch 8, **gekennzeichnet durch** Bepflanzen der reaktiven organischen Schicht (2) mit C2-Pflanzen.

10. Verfahren nach Anspruch 8 oder 9, **gekennzeichnet durch** Bepflanzen der reaktiven organischen Schicht (2) mit Nutzpflanzen zur Gewinnung nachwachsender Rohstoffe.

11. Verfahren nach einem der vorhergehenden Ansprüche, **gekennzeichnet durch** Verwenden eines Komposts für die reaktive organische Schicht (2).

12. Verfahren nach einem der vorhergehenden Ansprüche, **gekennzeichnet durch** selektives Einleiten der wässrigen Suspension (4) in mehrere über die Ausdehnung des Vererdungsbeckens (10) verteilte Teilbereiche (21 bis 23) des Vererdungsbeckens (10).

13. Verfahren nach einem der vorhergehenden Ansprüche, **gekennzeichnet durch** Beheizen des Vererdungsbeckens (10).

## Claims

1. Method for recovery of phosphates in a suspension (4) of solids in an aqueous solution (6) comprising
- concentrating phosphates in the aqueous solution (6),
- separating the solids from the aqueous solution (6) and
- precipitating of the phosphates from the aqueous solution (6),
**characterised in**
- **that** the concentrating and separating comprises
- placing a drainage layer (1) and a reactive organic layer (2) in a humification basin (10),
- feeding the suspension (4) into the humification basin (10) above the reactive organic layer (2),
- increasing the proportion of phosphates present in soluble form in the reactive organic layer (2) by biological degradation of solids containing phosphates,
- sluicing the soluble phosphates from the reactive organic layer (2) into the drainage layer (1) with the aqueous solution (6),
- monitoring the concentration of phosphates in the aqueous solution (6) from the region of the drainage layer (1) and
- intermittent draining of the aqueous solution (6) from the region of the drainage layer (1) and
- **that** the precipitating of the phosphates from the drained volumes of the aqueous solution with the increased phosphate content is started when a predetermined threshold value of the phosphate concentration is reached.

2. Method according to claim 1, **characterised in** fluid-tight sealing of the humification basin (10) towards the ground and subjecting the suspensions (4) fed into the humification basin (10) to the weather.

3. Method according to one of the preceding claims, **characterised in** monitoring of the redox potential of the aqueous solution (6) from the region of the drainage layer (1).

4. Method according to one of the preceding claims, **characterised in** feeding back drained aqueous solution (6) with a phosphate content below a predetermined threshold value into the humification basin (10).

5. Method according to one of the preceding claims, **characterised in** subsequent setting of different degrees of drying of solids accumulated in the humification basin (10).

6. Method according to claim 5, **characterised by** impounding the aqueous solution (6) up into the region of the accumulated solids before draining the aqueous solution (6) from the region of the drainage layer (1).

7. Method according to one of the preceding claims, **characterised by** adding magnesium to the volumes of aqueous solution (6) with increased phosphate content for a precipitation of magnesium ammonium phosphate.

8. Method according to one of the preceding claims, **characterised by** planting the reactive organic layer (2).

9. Method according to claim 8, **characterised by** planting the reactive organic layer (2) with C2 plants.

10. Method according to claim 8 or 9, **characterised by** planting the reactive organic layer (2) with agricultural crop plants for gaining renewable resources.

11. Method according to one of the preceding claims, **characterised by** using a compost for the reactive organic layer (2).

12. Method according to one of the preceding claims, **characterised by** selectively feeding the aqueous suspension (4) into several partial regions (21 to 23) of the humification basin (10) spread over the extension of the humification basin (10).

13. Method according to one of the preceding claims, **characterised by** heating the humification basin (10).

## Revendications

1. Procédé de récupération de phosphates à partir d'une suspension (4) de solides dans une solution aqueuse (6), avec
- concentration de phosphates dans la solution aqueuse (6),
- séparation des solides à partir de la solution aqueuse (6) et
- précipitation des phosphates à partir de la solution aqueuse (6),
**caractérisé en ce que**
- la concentration et la séparation comprennent
- l'agencement d'une couche de drainage (1) et d'une couche (2) organique réactive dans un bassin d'humification (10),
- introduction de la suspension (4) au-dessus de la couche (2) organique réactive dans le bassin d'humification (10),
- augmentation de la proportion de phosphates qui sont présents dans la couche (2) organique réactive sous forme soluble par biodégradation de solides contenant des phosphates,
- élimination par lavage des phosphates solubles à partir de la couche (2) organique réactive dans la couche de drainage (1) avec la solution aqueuse (6),
- surveillance de la concentration de phosphates dans la solution aqueuse (6) à partir de la zone de la couche de drainage (1) et
- enlèvement par intermittence de la solution aqueuse (6) à partir de la zone de la couche de drainage (1), et
- **en ce que** la précipitation des phosphates à partir des volumes enlevés de la solution aqueuse (6) s'effectue avec une teneur en phosphates accrue à partir d'une valeur limite prédéfinie de la concentration de phosphates.

2. Procédé selon la revendication 1, **caractérisé par** l'étanchéisation, étanche aux liquides, du bassin d'humification (10) par rapport au sous-sol et par l'exposition aux conditions météorologiques des suspensions (4) introduites dans le bassin d'humification (10).

3. Procédé selon l'une des revendications précédentes,
**caractérisé par** la surveillance du potentiel redox de la solution aqueuse (6) à partir de la zone de la couche de drainage (1).

4. Procédé selon l'une des revendications précédentes,
**caractérisé par** le renvoi dans le bassin d'humification (10) de la solution aqueuse (6) enlevée dont la teneur en phosphates est inférieure à une valeur limite prédéfinie.

5. Procédé selon l'une des revendications précédentes,
**caractérisé par** le réglage consécutif de degrés de séchage différents de solides qui se sont déposés dans le bassin d'humification (10).

6. Procédé selon la revendication 5, **caractérisé par** l'accumulation de la solution aqueuse (6) jusque dans la zone des solides déposés avant l'enlèvement de la solution aqueuse (6) à partir de la zone de la couche de drainage (1).

7. Procédé selon l'une des revendications précédentes,
**caractérisé par** l'addition de magnésium aux volumes de la solution aqueuse (6) avec une teneur accrue en phosphates pour la précipitation d'ammoniophosphate de magnésium.

8. Procédé selon l'une des revendications précédentes,
**caractérisé par** la plantation de la couche (2) organique réactive.

9. Procédé selon la revendication 8, **caractérisé par** la plantation de la couche (2) organique réactive avec des plantes C2.

10. Procédé selon la revendication 8 ou 9, **caractérisé par** la plantation de la couche (2) organique réactive avec des plantes cultivées pour la production de matières premières renouvelables.

11. Procédé selon l'une des revendications précédentes,
**caractérisé par** l'utilisation d'un compost pour la couche (2) organique réactive.

12. Procédé selon l'une des revendications précédentes,
**caractérisé par** l'introduction sélective de la suspension (4) aqueuse dans plusieurs zones partielles (21 à 23) du bassin d'humification (10) réparties sur l'étendue du bassin d'humification (10).

13. Procédé selon l'une des revendications précédentes,
**caractérisé par** le chauffage du bassin d'humification (10).
